(19) Europäisches Patentamt

European Patent Office

Office européen des brevets

(11) Veröffentlichungsnummer: **0 519 309 A2**

# (12) EUROPÄISCHE PATENTANMELDUNG

(21) Anmeldenummer: **92109775.4**

(22) Anmeldetag: **10.06.92**

(51) Int. Cl.⁵: **B30B 9/24**

(30) Priorität: **21.06.91 DE 4120465**
**31.01.92 DE 4202681**
**28.08.91 DE 9110631 U**
**28.11.91 DE 9114800 U**

(43) Veröffentlichungstag der Anmeldung:
**23.12.92 Patentblatt 92/52**

㠴 Benannte Vertragsstaaten:
**AT CH DE ES FR IT LI**

(71) Anmelder: **AMOS GmbH Anlagentechnik**
**Helmuth-Hirth-Strasse 9**
**W-7100 Heilbronn(DE)**

(72) Erfinder: **Amos, Günter**

**Hölderlinstrasse 32**
**W-7101 Flein(DE)**
Erfinder: **Dimitriou, Michael, Dipl-Ing.**
**Otto-Hahn-Strasse 34**
**W-7518 Bretten(DE)**
Erfinder: **Kollmar, Ulrich**
**Auf dem Berg 17**
**W-7530 Pforzheim(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**W-7500 Karlsruhe 1(DE)**

(54) **Pressvorrichtung zum Flüssigkeitsentzug aus einem Gut.**

㉗ Es wird eine Preßvorrichtung zum Flüssigkeitsentzug aus einem Gut angegeben mit einem Gestell, an dem Gestell zueinander parallel drehbar gelagerten Preßwalzen, deren gegenseitigem Abstand jeweils eine Umlenkwalze zugeordnet ist, und einem über die Preß- und Umlenkwalzen vermittels eines Antriebs in Durchlaufrichtung des abzupressenden Gutes mäanderförmig umlaufenden Siebband. Dabei ist jedem Wechsel des Siebbandes von einer Preßwalze zu einer Umlenkwalze eine Leiste oder eine Bürstenwalze zum Abtragen des Gutes von der Preßwalze auf das Siebband zugeordnet, an die sich Mittel zur Weiterführung des Gutes mit dem Siebband zum Zusammenlauf des Siebbandes mit der nächstfolgenden Preßwalze anschließen. In Durchlaufrichtung des Gutes ist der letzten Preßwalze eine Einrichtung zur Entnahme des abgepreßten Gutes und zur Reinigung des Siebbandes nachgeordnet. Unterhalb der Preßwalzen sind Mittel zum Auffangen und Abführen der Flüssigkeit vorgesehen. Durch am Gestell drehbar gelagerte Rückführwalzen findet die Überleitung des Siebbandes von der letzten Preßwalze zur ersten Preßwalze statt.

Fig. 1

Die Erfindung betrifft eine Preßvorrichtung zum Flüssigkeitsentzug aus einem Gut.

Für derartige Preßvorrichtungen gibt es vielfache Anwendungsmöglichkeiten, auf die sich der Gegenstand der Erfindung erstrecken soll. So kommen die Preßvorrichtungen als Entsaftungsvorrichtung für Früchte in Form von Obst, Beeren, Trauben und Gemüse in Frage. Ebenso eignen sie sich zur Entsaftung von Pflanzen in Form von Gras, Brennesseln oder dergleichen. Auch eignen sie sich zum Abpressen beispielsweise einer Biomasse, zur Schlammentwäs-serung oder dergleichen. Nachfolgend wird allgemein nur von einer Preßvorrichtung zum Flüssigkeitsentzug aus einem Gut gesprochen, womit die vorstehend beispielhalber aufgezählten und weitere ähnliche Anwendungunsfälle eingeschlossen sein sollen.

Derartige bekannte Preßvorrichtungen weisen ein Gestell auf mit an dem Gestell zueinander parallel drehbar gelagerten, quer zu ihren Drehachsen miteinander fluchtenden Preßwalzen, wobei benachbarte Preßwalzen einen gegenseitigen Abstand aufweisen und die Preßwalzen mäanderförmig von einem Paar aufeinanderliegender Siebbänder durchlaufen werden, zwischen die das abzupressende Gut über eine Aufgabevorrichtung vor der ersten Preßwalze eingebracht ist. Das Gut wird also zwischen den Siebbändern eingefangen und mit diesen über die Preßwalzen geführt, wodurch die im Gut enthaltene Flüssigkeit ausgetrieben wird. Hierzu haben die Preßwalzen durchbrochene Mäntel, so daß die Flüssigkeit nicht nur bezogen auf die Preßwalzen nach radial außen sondern auch nach radial innen austreten und aufgefangen werden kann.

Diese bekannten Preßvorrichtungen haben sich bewährt, verbinden sich aber mit einem erheblichen apparativen und Steuerungstechnischen Aufwand.

Es müssen jeweils zwei Siebbänder über die Preßwalzenstrecke geführt werden, was bedingt, daß die Siebbänder nach Durchlaufen der Preßwalzenstrecke voneinander fortgeführt und getrennt wieder zum Einlauf zurückgeführt werden, um am Ende der Preßwalzenstrecke das abgepreßte Gut auszubringen und zu Beginn der Preßwalzenstrecke das noch zu behandelnde Gut wieder einzufangen. Hierzu bedarf es am Ende der Preßwalzenstrecke der getrennten Reinigung zweier Siebbänder. Ferner ist es erforderlich, zwei Siebbänder auf ihrer Rücklaufstrecke im Hinblick auf den geraden Lauf zu justieren, wozu mittels seitlicher Fühler und entsprechender, die Spur der Siebbänder aufrechterhaltender Steuervorrichtungen ein erheblicher steuerungstechnischer und vorrichtungstechnischer Aufwand erforderlich ist. Schließlich müssen zwei getrennt voneinander umlaufende Siebbänder in gegenseitigem Gleichlauf und unter der zueinander passenden Vorspannung gehalten werden.

Dies bedeutet, daß die bekannte Vorrichtung weitestgehend von einer automatischen Steuerung abhängig ist, die bei auftretenden Betriebsstörungen eine einfache Korrektur nicht ermöglicht, vielmehr die Hinzuziehung von entsprechendem Fachpersonal erfordert, das üblicherweise bei Vorrichtungen der in Rede stehenden Art nicht ständig zur Verfügung steht. Auch besteht keine Möglichkeit, die Vorrichtung im Hinblick auf das jeweils zu verarbeitende Gut in einfacher Weise manuell zu beeinflussen bzw. einzurichten.

Andererseits ist es bekannt, mit Hilfe eines Siebbandes abzupressendes Gut über einen gewissen Umschlingungsbogen an einer Preßwalze vorbeizuführen. Solche Vorrichtungen sind verhältnismäßig einfach, erlauben jedoch nicht die Verarbeitung großer Mengen des Gutes und insbesondere nicht eine wirtschaftlichen Gesichtspunkten entsprechende Abpressung der in dem Gut enthaltenen Flüssigkeit, so daß nur ein noch große Flüssigkeitsmengen enthaltendes Preßgut entsteht.

Aufgabe der Erfindung ist es, eine Preßvorrichtung zu schaffen, die von ihrem Aufbau her einfach und billig sowie ohne besondere steuerungstechnische Mittel leicht zu handhaben ist, dabei aber andererseits in einer mit den bekannten Einrichtungen vergleichbaren Weise eine hohe Flüssigkeitsausbeute gewährleistet.

Die Aufgabe ist erfindungsgemäß gelöst durch eine Preßvorrichtung zum Flüssigkeitsentzug aus einem Gut mit einem Gestell, an dem Gestell zueinander parallel drehbar gelagerten, quer zu ihren Drehachsen, das heißt hinsichtlich ihrer beiderseitigen Stirnseiten, im wesentlichen miteinander fluchtenden Preßwalzen, wobei benachbarte Preßwalzen einen gegenseitigen Abstand aufweisen, mit einer jedem Preßwalzenabstand zugeordneten, zu den Preßwalzen achsparallelen, drehbar am Gestell gelagerten Umlenkwalze, einem über die Preß- und Umlenkwalzen vermittels eines Antriebes in Durchlaufrichtung des abzupressenden Gutes mäanderförmig umlaufenden Siebband, wobei das Siebband die Preßwalzen im wesentlichen unter- und die Umlenkwalzen im wesentlichen überläuft, mit einer der ersten Preßwalze vorgeschalteten Aufgabe für das Gut, die das Gut in den Spalt zwischen erste Preßwalze und Siebband entläßt, mit einer jedem Wechsel des Siebbandes von einer Preßwalze zu einer Umlenkwalze zugeordneten, auf den Preßwalzenmantel gehenden, vom Siebband beabstandeten, zur Walzenachse parallelen Leiste oder Bürstenwalze zum Abtragen des Gutes von der Preßwalze auf das Siebband, woran sich Mittel zur Weiterführung des Gutes mit dem Siebband zum Zusammenlauf des Siebbandes mit der nächstfolgenden Preßwalze anschließen, mit einer in Durchlaufrichtung des Gutes durch die Preßvorrichtung der letzten Preßwalze nachgeordneten Einrichtung zur Entnahme des abgepreßten Gutes und zur Reinigung des Siebbandes, mit unterhalb der Preßwalzen angordneten Mitteln zum Auffangen und Abführen der Flüssigkeit und mit am Gestell drehbar gelagerten Rückführwalzen zur Überleitung des Siebbandes von der letzten Preßwalze zur ersten Preßwalze, welche Rückführwalzen parallel zu den Preßwalzen und mit diesen quer zu ihren Drehachsen fluchtend angeordnet sind.

Mit diesen erfindungsgemäßen Merkmalen ergibt sich eine äußerst einfache und wirkungsvolle Preßvorrichtung, die durch das Gut mit einem im wesentlichen ununterbrochenen Kuchen durchlaufen werden, wobei nacheinander an den einzelnen Preßwalzen zunehmend Flüssigkeitsentzug aus dem Gut stattfindet.

Dadurch, daß über eine beliebige Zahl von durch Preßwalzen gebildeten Stationen das Gut nur mit Hilfe eines Siebbandes geführt werden muß, ergeben sich entsprechend für die Reinigung, Rückführung und Laufsteuerung des Siebbandes einfache Mittel, die eine Handhabung der Vorrichtung auch durch nicht speziell geschultes Personal ermöglichen. Die erfindungsgemäße Vorrichtung ist also einfach in ihrem Aufbau und robust, obwohl sie auf der anderen Seite, wie die Erfahrung gezeigt hat, den Durchsatz und die wirtschaftliche Ausbeute erheblicher Gutmengen erlaubt.

Außerdem bietet sich in einfacher Weise die Möglichkeit einer Anpassung an die jeweiligen Bedürfnisse durch Austausch bzw. Dimensionierung von Walzen. Hier bietet sich insbesondere eine Modulbauweise an, bei der in "vorgefertigte" Lagerstellen des Gestells beispielsweise Preßwalzen und Umlenkwalzen verschiedener Dimensionierung eingehängt oder eingelegt werden können.

Die Preßwalzen können geschlossene, glatte Walzenmäntel aufweisen, so daß die Flüssigkeit ausschließlich über das Siebband nach außen abgegeben wird. Zur Verbesserung der Flüssigkeitsausbeute und im Hinblick auf das jeweils zu verarbeitende Gut kann jedoch auch vorgesehen sein, daß die Preßwalzenmäntel als Siebmäntel ausgebildet sind, und daß die Preßwalzen über stirnseitige Öffnungen mit den Mitteln zum Auffangen und Abführen der Flüssigkeit in Verbindung stehen. Hier ist es möglich, daß die Flüssigkeit sowohl nach radial außen als auch nach innen aus der Paarung zwischen Siebband und Preßwalze ausgetrieben wird, ohne daß es hierzu der Zusammenführung zweier Siebbänder bedürfte.

Ferner ist es vorteilhaft, daß die Preßwalzen im wesentlichen in einer geradlinigen Reihe in Durchlaufrichtung des Gutes hintereinander angeordnet sind. Dadurch ergibt sich eine sich im wesentlichen in einer Richtung erstreckende und damit verhältnismäßig wenig Platz beanspruchende Vorrichtung auch für den Durchsatz großer Gutmengen.

Ferner ist es zweckmäßig, daß in an sich bekannter Weise der Durchmesser nacheinander folgender Preßwalzen in Durchlaufrichtung des Gutes stufenweise geringer ausgelegt ist, wobei die einzelnen Stufen auch durch zwei gleiche Walzen gebildet sein können. Hiermit ergibt sich, daß zu Beginn des Behandlungsvorganges für das Gut eine Preßwalze mit verhältnismäßig großem Durchmesser vorhanden ist, was zu einem entsprechend großen Umschlingungsbogen zwischen Siebband und Preßwalze und somit zu einer verhältnismäßig geringen Flächenpressung auf das Gut führt, die eine schonende, zeitlich langgestreckte und damit ergiebige Abpressung des frischen Gutes erlaubt. Im weiteren Fortgang der Behandlung des Gutes wird dann durch zunehmend im Durchmesser kleinere Preßwalzen der Preßdruck auf das Gut erhöht, um ebenso zunehmend auch weitere Flüssigkeitsmengen bis zu einem wirtschaftlich nicht mehr auszutreibenden Rest auszubringen.

Zur weiteren Ausgestaltung der erfindungsgemäßen Vorrichtung ist es vorteilhaft, daß bei im wesentlichen horizontal hintereinander liegenden Preßwalzen die jedem Preßwalzenabstand zugeordneten Umlenkwalzen mit den Preßwalzen im wesentlichen in Reihe angeordnet sind, und daß die Umlenkwalzen den jeweiligen Preßwalzenabstand im wesentlichen ausfüllen. Hier ergibt sich also eine im wesentlichen horizontal angeordnete Vorrichtung mit hintereinander angeordneten Preß- und Umlenkwalzen, über die mittels des Siebbandes das Gut mäanderförmig geführt und zunehmend abgepreßt wird. Erkennbar ist die Vorrichtung äußerst einfach, indem an einem normalen horizontalen Gestell die Reihe von Preß- und Umlenkwalzen nacheinander drehbar gelagert angeordnet ist.

Auch ist in einfacher Weise sichergestellt, daß das Gut mäanderförmig entlang der Preß- und Umlenkwalzen weitergeführt werden kann, wobei es zweckmäßig ist, daß die Mittel zur Weiterführung des Gutes sich an die jeweiligen Leisten bzw. Bürstenwalzen in Durchlaufrichtung des Gutes anschließende Umlenkbleche sind, die den zwischen benachbarten Preßwalzen freien, vom Siebband überdeckten Mantelbogen der zugeordneten Umlenkwalzen teilweise und im wesentlichen äquidistant unter Freilassung eines wenigstens der Dicke des Siebbandes und der durch das Gut gebildeten Schicht entsprechenden Abstandes überdecken.

Hier wird also das Gut jeweils nach Passieren einer Preßwalze von dieser abgetragen, insbesondere abgeschabt und durch die Umlenkbleche am Siebband gehalten, um zusammen mit diesem der nächsten Preßwalze zugeführt zu werden, wobei eine Ablösung des Gutes vom Siebband und dessen nicht kontinuierliche Weiterführung vermieden ist, so daß durch diesen Umlenkprozeß keine Förderungsprobleme entstehen können. Das Gut wird also quasi von Preßwalze zu Preßwalze zwangsweise zusammen mit dem Siebband weitergeführt durch Mittel, die während des Betriebs einer zusätzlichen Behandlung nicht unterworfen werden müssen, so daß das im bekannten Falle vorhandene zweite Siebband, das gespannt, geführt und gereinigt werden muß, durch einfache Mittel entfallen kann, ohne daß die von der Ausbeute her gesehen vorhandenen Wirksamkeit der Preßvorrichtung eine Beeinträchtigung erfahren würde.

Was die Ausbildung der Umlenkbleche betrifft, so können diese dem Siebband zugewandte, zur jeweiligen Umlenkwalze im wesentlichen sich radial erstreckende Leitbleche für das Gut aufweisen, wobei wenigstens zwei Leitbleche für die seitliche Begrenzung des Weges für das Gut vorgesehen sein können und auch darauf geachtet werden kann, daß der gegenseitige Abstand der Leitbleche quer zur Durchlaufrichtung des Gutes sich in Durchlaufrichtung verringernd ausgebildet ist.

Es besteht also mit Hilfe der Umlenkbleche und an diesen angebrachter Leitbleche eine einfache und störungstechnisch keinerlei zusätzliche Aufwendungen erfordernde Möglichkeit, den Durchlauf des Gutes in der gewünschten Richtung zu beeinflussen insbesondere dahingehend, daß das Gut seitlich das Siebband nicht verlassen und damit aus dem Durchlauf austreten kann. Entsprechende Maßnahmen, die vor allem an den seitlichen Rändern des durchlaufenden Gutes sinnvoll sind, können sich auch durch weitere Leitbleche innerhalb des Gutstromes unterstützen lassen, damit nicht nur an den Rändern eine besondere Massierung des Gutes auftreten kann.

Sind nach einer anderen Ausführungsform der Erfindung die Preßwalzen im wesentlichen in Vertikalrichtung hintereinanderliegend angeordnet mit Aufgabe des Gutes auf den Spalt zwischen oberster Preßwalze und Siebband, so ist es vorteilhaft, daß jeder Umlenkwalze ein unterhalb dieser angeordnetes und bis an die nachfolgende Preßwalze geführtes Fangblech für das Gut zugeordnet ist. Für diesen Fall treten also die Fangbleche an die Stelle der bei der horizontalen Bauweise der Preßvorrichtung vorhandenen Umlenkbleche, indem sie das von der jeweiligen Preßwalze durch die dieser zugeordneten Leiste abgeschabte Gut der nächsten Preßwalze zuführen, soweit dieses Gut beim Überlaufen der zugeordneten Umlenkwalze sich vom Siebband ablöst. Wesentlich ist auch hier, daß das Gut ohne nennenswerte Unterbrechung von einer Preßwalze zur nachfolgenden Preßwalze übergeführt wird.

Für beide vorstehend genannten Bauformen der Preßvorrichtung ist es vorteilhaft, daß der Auslaufquerschnitt der Aufgabe für das Gut quer zur Durchlaufrichtung des Gutes schmaler als das Siebband ist. Hierdurch wird sichergestellt, daß von Anfang an der Strom des abzupressenden Gutes innerhalb der Breite des Siebbandes bleibt.

Was die Gestaltung der Vorrichtung am Schluß der Behandlung des abzupressenden Gutes betrifft, so ist es zweckmäßig, daß die Einrichtung zur Entnahme des abgepreßten Gutes und zur Reinigung des Siebbandes eine quer zur Durchlaufrichtung des Gutes angeordnete, auf dem Siebband aufsitzende Abstreifleiste mit nachgeschalteter, auf das Siebband gehender Bürstenwalze aufweist, wobei das Siebband zusammen mit dem abgepreßten Gut diese Einrichtung über eine der letzten Preßwalze nachgeschaltete Umlenkwalze durchläuft und das abgepreßte Gut über eine der Abstreifleiste nachgeschaltete Führungsebene abführbar ist.

Wie ersichtlich gestaltet sich auch diese Einrichtung bei der erfindungsgemäßen Vorrichtung äußerst einfach, indem, wie sich gezeigt hat, das Siebband durch die Bürstenwalze praktisch vollständig zu reinigen ist, nachdem das abgepreßte Gut durch die Abstreifleiste und die dieser nachgeschalteten Führungsmittel entfernt wurde. Waschvorrichtungen für das Siebband, wie sie in bekannten Fällen erforderlich waren, erweisen sich als nicht notwendig, so daß eine Reinigung des Siebbandes am Schluß der Durchlaufstrecke für das Gut ohne zusätzliche Aufwendung von weiteren und zu regenerierenden Reinigungsmitteln möglich ist.

Zur weiteren Vervollkommnung der Preßvorrichtung kann vorgesehen sein, daß die Leiste auf ihrer dem abgetragenen Gut bzw. dem Siebband zugewandten Seite mit in das Gut eintauchenden Störkörpern versehen ist. Diese Störkörper haben die Aufgabe, das abzupressende Gut vom Sieb abzuheben, um es zu wenden bzw. um den durch das Gut gebildeten Kuchen zu brechen, bevor das Gut der nächsten Preßwalze zugeführt wird. Damit ist dafür gesorgt, daß der gesamte Kuchen wieder aufgelockert wird und freie Kanäle bildet, wodurch die Preßbarkeit verbessert wird.

In Ausgestaltung kann hier vorgesehen sein, daß die Störkörper durch eine sich quer zur Laufrichtung des Siebbandes erstreckende Reihe von an der Leiste mit gegenseitigem Abstand befestigten Rohren oder Stangen gebildet sind. Dabei können die Stangen in die Leiste eingeschraubte und durch Mutter und Kontermutter fixierte Gewindestangen sein, womit sich die Möglichkeit ergibt, die Eintauchtiefe der Störkörper in das Gut den jeweiligen Gegebenheiten feinfühlig anzupassen.

Ferner kann in diesem Zusammenhang vorgesehen sein, daß die Leiste um eine quer zur Vorschubrichtung des Siebbandes gelegene Achse gegen eine sie an den Preßwalzenmantel drückende Rückstellkraft schwenkbar angeordnet ist, wobei die Rückstellkraft einstellbar sein kann, insbesondere durch ein an der Leiste angreifendes, verschiebbares Gegengewicht gebildet sein kann.

Eine weitere Möglichkeit im vorstehenden Sinne kann darin bestehen, daß die Bürstenwalze durch eine Stachelwalze gebildet ist, deren Stachel gleichzeitig in das abgetragene Gut eintauchen. Dabei können die Stachel durch gegenseitig beabstandete stangenförmige oder schaufelförmige Teile gebildet sein, die in schraubengangförmig um die Welle der Stachelwalze verlaufenden Reihen angeordnet sind. Je nach den Gegebenheiten des Einzelfalles kann zusätzlich vorgesehen werden, daß die Stachelwalze vorzugsweise in der Drehrichtung der zugeordneten Preßwalze drehangetrieben ist, um ihre Wirksamkeit zu erhöhen.

Nach einer dritten Möglichkeit in dieser Richtung kann vorgesehen sein, daß - bezogen auf die Vorschubrichtung des Siebbandes - im Bereich des Endes des Umschlingungsbogens des Siebbandes gegenüber den Umlenkwalzen an wenigstens einer Umlenkwalze ein Wender für das abzupressende Gut angeordnet ist. Dieser Wender hat die Aufgabe, das abzupressende Gut vom Sieb abzuheben, um es zu wenden bzw. um den durch das Gut gebildeten Kuchen zu brechen, bevor das Gut der nächsten Preßwalze zugeführt wird.

In Ausgestaltung dieser Bauform kann vorgesehen sein, daß der Wender als gegen das Siebband gerichteter, in das abzupressende Gut eintauchender, im wesentlichen entgegengesetzt der Vorschubrichtung des Siebbandes gerichteter Schaber ausgebildet ist. Es kann jedoch auch vorgesehen sein, daß der Wender als gegen das Siebband gerichtete, in das abzupressende Gut eintauchende Stachelwalze mit zur Umlenkwalze paralleler Achse ausgebildet ist. Dabei kann die Stachelwalze als durch das Siebband bzw. den Kuchen angetrieben mitlaufende Walze ausgebildet sein. Sie kann aber auch angetrieben sein, wodurch sich insbesondere die Möglichkeit ergibt, die Stachelwalze gegenüber dem Siebband voreilen zu lassen. Selbstverständlich können auch beide Bauformen - Schaber und Stachelwalze - an verschiedenen Preßstationen oder auch an einer Preßstation gemeinsam angewendet werden.

Zur weiteren Verbesserung der Ausbeute der Preßvorrichtung kann ferner vorgesehen sein, daß - bezogen auf die Vorschubrichtung des Siebbandes - im Bereich des Endes des Umschlingungsbogens des Siebbandes gegenüber den Preßwalzen an wenigstens einer Preßwalze auf der der Preßwalze abgewandten Seite des Siebbandes ein quer zur Längsrichtung des Siebbandes sich erstreckender Abstreifer mit dem Siebband in Eingriff ist. Hierdurch läßt sich insbesondere am Ende der Preßvorrichtung die Menge Flüssigkeit noch gewinnen und in die Sammelvorrichtung ableiten, die naturgemäß auf der in Rede stehenden Seite am Siebband anhaftet und ohne die vorstehende Maßnahme verloren gehen könnte, indem sie mit dem abgepreßten Gut ausläuft.

In weiterer Nutzung eines solchen Abstreifers kann vorgesehen sein, daß der Abstreifer vor dem Ende des Umschlingungsbogens angeordnet ist, sich angenähert tangential zur Preßwalze und entgegengesetzt der Vorschubrichtung des Siebbandes erstreckt und mit gegebenenfalls einstellbarer Kraft gegen das Siebband gedrückt ist.

Diese Maßnahme hat zur Folge, daß in dem Bereich, wo der Druck zwischen Preßwalze und Preßband stark abfällt, eine zusätzliche druckausübende Maßnahme zur Steigerung der Preßwirkung auch in diesem Bereich ergriffen wird. Die angenähert tangential bezüglich der Preßwalze eingestellte Richtung des Abstreifers bewirkt eine Stauchung des abzupressenden Gutes. Innerhalb der damit gebildeten Stautasche wird das Gut entspannt, bevor es durch den Abstreifer wieder zusammengedrückt wird.

Auch in diesem Falle kann ein solcher Abstreifer bei mehreren Preßwalzen vorgesehen werden. Außerdem besteht nach einem weiteren Merkmal der Erfindung die Möglichkeit, daß wenigstens ein weiterer Abstreifer der genannten Art am Umschlingungsbogen dem ersten Abstreifer bei derselben Preßwalze bezüglich der Vorschubrichtung des Siebbandes vorgeschaltet ist, also die geschilderte Wirkung mehrfach über den Umschlingungsbogen des Siebbandes an einer Preßwalze auftritt.

Was die Laufsteuerung für das Siebband betrifft, so hat es sich als zweckmäßig erwiesen, daß wenigstens eine der Rückführwalzen als mittensymmetrisch bombierte Walze ausgebildet ist. Diese an sich bekannte einfache Maßnahme hat sich als für die Spurhaltung des Siebbandes vollkommen ausreichend erwiesen, so daß jedwede Seitenabfühlung zur Steuerung des Spurverhaltens des Siebbandes zusammen mit den dafür erforderlichen Mitteln entfallen kann. Gerade damit ist die erfindungsgemäße Vorrichtung besonders für den einfachen Betrieb geeignet ohne das zusätzliche Erfordernis gegebenenfalls im Störungsfalle heranzuziehenden Fachpersonals.

Zur Spannung des Siebbandes kann vorgesehen sein, daß die Lagerung wenigstens einer der Rückführwalzen am Gestell verstellbar angeordnet ist, wobei hier einfache Spannmittel beispielsweise mit Hilfe von Stellschrauben Verwendung finden können, um die notwendige Spannung des Siebbandes einzurichten.

Was den Antrieb der Preßvorrichtung betrifft, so kann dieser grundsätzlich über eine oder mehrere der Preß- und/oder Umlenkwalzen erfolgen, wobei es sich als besonders zweckmäßig erwiesen hat, die letzten Preß- und Umlenkwalzen für diese Antriebsaufgabe heranzuziehen.

Zur weiteren Steigerung des Flüssigkeitsentzugs kann vorgesehen werden, daß bei wenigstens einer durch eine Umlenkwalze zwischen zwei Preßwalzen gebildeten Station zwei Umlenkwalzen mit gegenseitigem Abstand nebeneinander angeordnet sind, und daß im Abstand das Siebband über eine auf seiner dem Gut abgewandten Seite angeordnete Saugvorrichtung geführt ist, die zusätzlich Flüssigkeit aus dem Gut und von der Unterseite des Siebbandes fortnimmt.

Auch besteht die Möglichkeit, daß oberhalb des Siebbandes eine sich quer zu dessen Vorschubrichtung erstreckende Schwemmrinne angeordnet ist, durch die sich Wasser oder andere Flüssigkeiten zwecks Waschung von Schlämmen oder anderen Medien, oder beispielsweise zur Extraktion von Wertstoffen bei der Obstverarbeitung aufgeben lassen. Dem gleichen Zweck kann schließlich die Maßnahme dienen, daß zumindest ein Spritzrohr vor dem Ende der dem Flüssigkeitsentzug dienenden Strecke angeordnet ist.

Weitere Merkmale und Einzelheiten der Erfindung ergeben sich aus der nachfolgenden Beschreibung von Ausführungsformen anhand einer als Entsaftungsvorrichtung für Früchte gedachten Preßvorrichtung, die auf der Zeichnung dargestellt sind. In der Zeichnung zeigen:

Fig. 1 eine vereinfachte Seitenansicht einer Entsaftungsvorrichtung in horizontaler Bauweise;

Fig. 2 einen vergrößerten Ausschnitt gemäß dem Bereich II in Fig. 1;

Fig. 3 eine Stirnansicht der Vorrichtung gemäß Fig. 1, dort von links gesehen;

Fig. 4 die schematische Darstellung einer Entsaftungsvorrichtung in im wesentlichen vertikaler Bauweise;

Fig. 5 einen Ausschnitt aus der Entsaftungsvorrichtung gemäß Fig. 1 in vergrößerter Darstellung mit einer weiteren Einzelheit;

Fig. 6 einen Ausschnitt gemäß Fig. 5 mit einer abgeänderten Form der weiteren Einzelheit;

Fig. 7 einen Ausschnitt ähnlich Fig. 5 mit einer dritten Form der weiteren Einzelheit;

Fig. 8 eine Schnittansicht VIII-VIII aus Fig. 7;

Fig. 9 einen Ausschnitt ähnlich Fig. 5 mit einer vierten Form der weiteren Einzelheit;

Fig. 10 eine Ansicht X aus Fig. 9;

Fig. 11 eine weitere Ergänzung des Gegenstandes gemäß Fig. 1 in einer Ausschnittdarstellung ähnlich Fig. 5 und 6 und

Fig. 12 eine vereinfachte Seitenansicht einer Entsaftungsvorrichtung in horizontaler Bauweise mit weiteren Zusatzeinrichtungen.

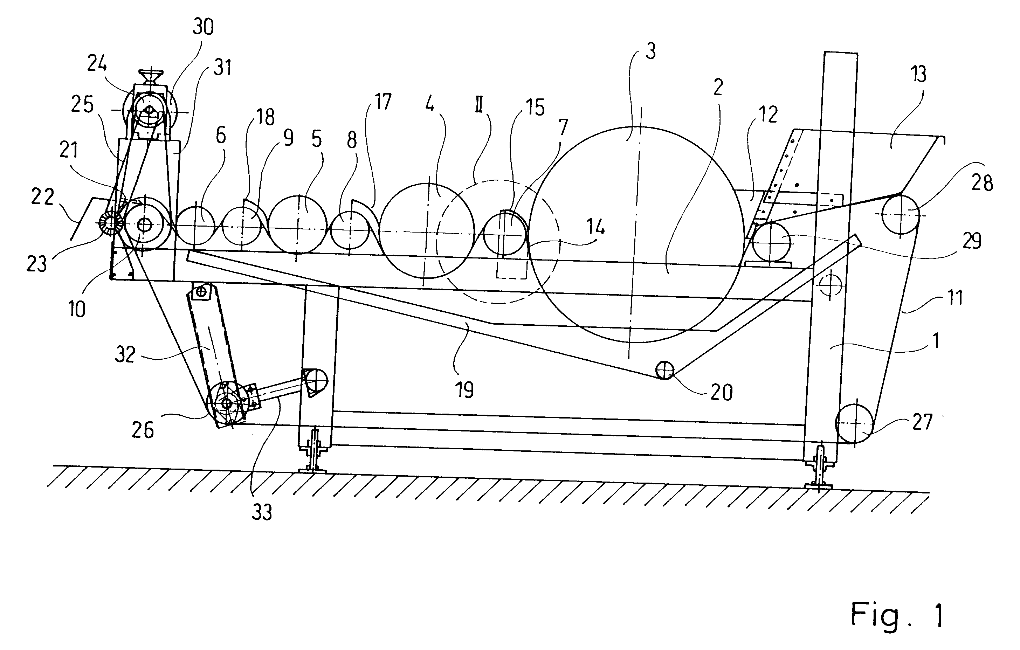

Fig. 1 zeigt eine Entsaftungsvorrichtung für Früchte mit einem Maschinengestell 1 und an dessen horizontalen Holmen 2 in nicht im einzelnen dargestellter Weise drehbar gelagerten Preßwalzen 3, 4, 5, 6, die horizontal fluchtend hintereinander angeordnet sind und gegenseitig einen Abstand bilden, der im wesentlichen durch Umlenkwalzen 7, 8, 9 ausgefüllt ist, wobei sich an die letzte Preßwalze 6 eine noch näher zu erläuternde Umlenkwalze 10 anschließt.

Zwischen den genannten Walzen ist ein Siebband 11 mäanderförmig durchgeführt, das jeweils die Preßwalzen 3, 4, 5, 6 unterquert, während es über die Umlenkwalzen 7, 8, 9 und 10 auf deren oberen Bereich verläuft.

Wie ersichtlich, hat die erste Preßwalze 3 einen wesentlich größeren Durchmesser als die nachfolgenden Preßwalzen, wobei der Durchmesser in Durchlaufrichtung des Gutes, dessen Saft abgepreßt werden soll, stets abnimmt, so daß die letzte Preßwalze 6 vergleichsweise den kleinsten Durchmesser aufweist.

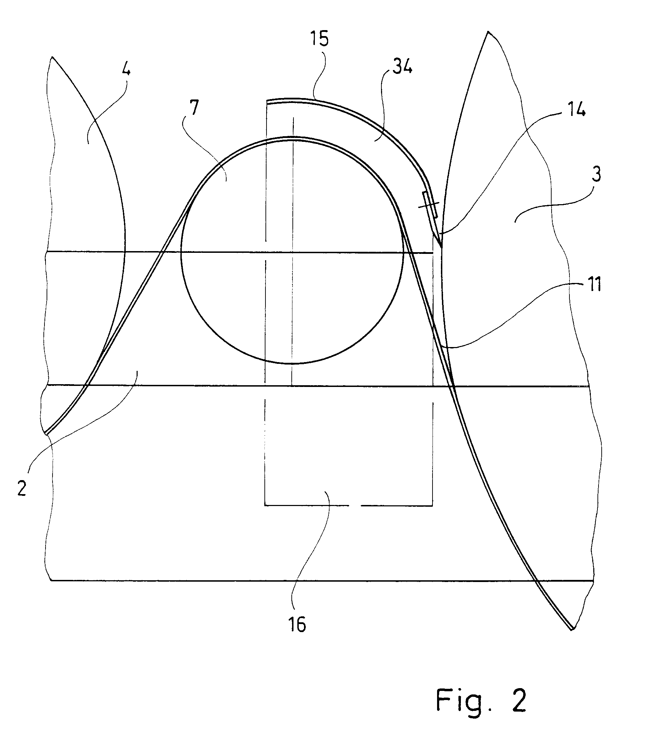

Dem durch das Siebband 11 und die erste Preßwalze 3 gebildeten Einlaufspalt 12 wird das abzupressende Gut über eine Aufgabe 13 in Form eines Trichters oder dergleichen zugeführt, der das Gut über einen Austrittsquerschnitt zwischen Siebband 11 und Preßwalze 3 entläßt. Nachdem das Gut so entlang des Umlaufbogens zwischen Siebband 11 und Preßwalze 3 in einer ersten Stufe entsaftet worden ist, wird es von der Preßwalze 3, wie näher aus Fig. 2 ersichtlich, durch eine Leiste 14 abgeschabt und mit dem Siebband 11 über die Umlenkwalze 7 weitergeführt so, daß es zusammen mit dem Siebband 11 an die nächstfolgende Preßwalze 4 gerät und entlang dem dortigen Umschlingungsbogen zwischen Preßwalze und Siebband 11 weiter entsaftet werden kann.

Damit das Gut nach dem Verlassen der Preßwalze 3 sich nicht vom Siebband 11 lösen und in ungeordneter Form weitergeführt werden kann, ist ein Umlenkblech 15 im Anschluß an die Leiste 14 vorgesehen, das sich im wesentlichen äquidistant über einen Teil des Umfanges der Umlenkwalze 7 erstreckt soweit, bis das Gut im wesentlichen durch Schwerkrafteinfluß wieder in die Paarung zwischen Siebband 11 und nächstfolgender Preßwalze 4 weitergeführt wird.

Das Umlenkblech 15 ist getragen von seitlichen Wangenblechen 16, durch die es beispielsweise an den Holmen 2 befestigt sein kann.

Der gleiche Vorgang und der gleiche Aufbau finden sich wieder zwischen benachbarten Preßwalzen 4, 5 bzw. 5, 6 mit Hilfe von Umlenkblechen 17, 18, wobei hier die Wirkungsweise nicht mehr im einzelnen wiederholt zu werden braucht.

Der bei dieser Bearbeitung austretende Fruchtsaft wird in einer Auffangwanne 19 gesammelt, die sich unterhalb sämtlicher Preßwalzen 3, 4, 5 und 6 erstreckt und einen Ablauf 20 zur Entnahme des abgepreßten Saftes aufweist.

Am Schluß der Bearbeitungsstrecke schließt sich an die letzte Preßwalze 6 eine Umlenkwalze 10 an, an der auf dem Siebband 11 eine Abstreifleiste 21 aufsitzt, an die sich ein Führungsblech 22 zum Ableiten des entsafteten Gutes anschließt.

Hinter die Abstreifleiste 21 ist eine Bürstenwalze 23 geschaltet, die angetrieben durch einen Motor 24 über beispielsweise einen Riemen 25 das Siebband 11 endgültig reinigt, bevor dieses über Rückführwalzen 26, 27, 28 und 29 wieder zum Maschineneinlauf, das heißt zur ersten Preßwalze 3 rückgeleitet wird.

Durch einen weiteren Motor 30 findet im übrigen mit Hilfe eines Treibmittels 31 der Antrieb der Entsaftungsvorrichtung über die letzte Umlenkwalze 10 statt, das Siebband wird also bezüglich der entsaftenden Arbeitsstrecke durch die Vorrichtung gezogen, woraus sich entlang der Preßwalzen 3, 4, 5 und 6 ein zunehmender Druck im Umschlingungsbogen zwischen jeweiliger Preßwalze und dem Siebband 11 ergibt.

Um die Grundspannung des Siebbandes 11 herzustellen bzw. aufrechtzuerhalten, ist die Rückführwalze 26 beidseits über am Maschinengestell 1 schwenkbar angelenkte Arme 32 gelagert, wobei die Schwenkstellung dieser Arme durch eine nicht näher gezeichnete Vorrichtung 33 bestimmbar und einstellbar ist. Diese Vorrichtung 33 kann beispielsweise ein einfacher Wagenheber sein, der zwischen Maschinengestell 1 und den Schwenkhebeln 32 eingesetzt ist.

Damit das abzupressende Gut sich während des Durchlaufs durch die Vorrichtung innerhalb der Breite des Siebbandes 11 hält, können die Umlenkbleche 15, 17, 18 seitlich mit Leitblechen 34 versehen sein (siehe Fig. 2), die innerhalb der tragenden Wangen 16 angeordnet und auf die Breite des Siebbandes 11 in entsprechender Weise eingestellt sind. Über die Breite des Siebbandes 11 können weitere derartige Leitbleche zur Mitte des Siebbandes hin angeordnet sein, um die Arbeit der äußeren Leitbleche so zu unterstützen, daß sich im Bereich der äußeren Leitbleche nicht eine besondere Ansammlung des Gutes ergibt.

Schließlich ist für die Spurhaltung des Siebbandes 11 darauf hinzuweisen, daß wenigstens eine der Rückführwalzen 26 bis 29 als mittensymmetrisch bombiert gestaltete Walze ausgebildet sein kann, wodurch sich in bekannter Weise eine bezogen auf die Walze mittige Zentrierung des Siebbandes 11 bei seinem Durchlauf ergibt.

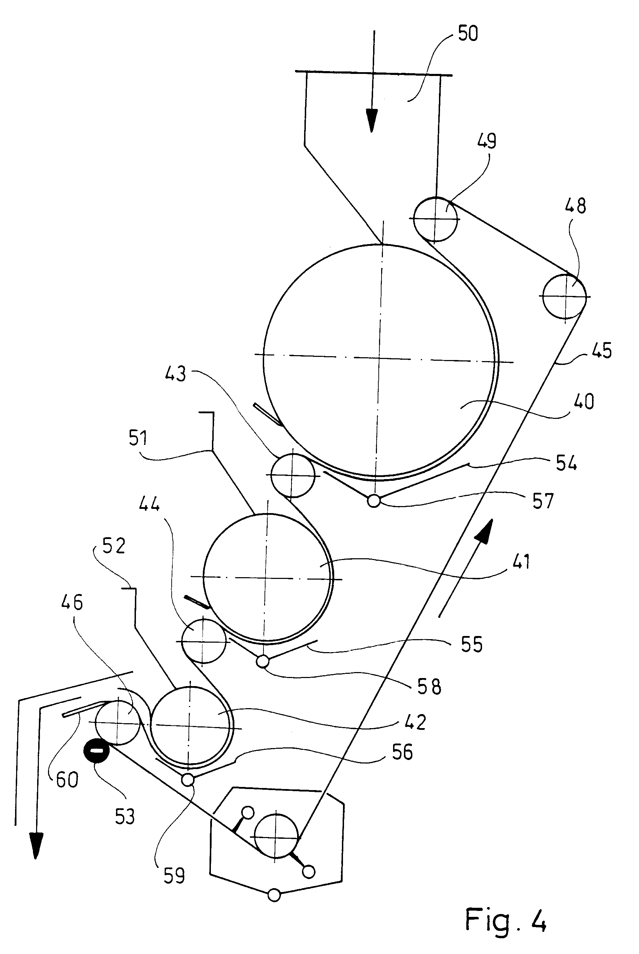

Fig. 4 zeigt eine Vorrichtung der in Rede stehenden Art in im wesentlichen vertikaler Bauweise und in äußerst vereinfachter Darstellung unter Fortlassung des Maschinengestells.

Hier sind in Durchlaufrichtung des zu entsaftenden Gutes hintereinander angeordnet Preßwalzen 40, 41 und 42, zwischen denen Umlenkwalzen 43 und 44 laufen.

Über die Walzen ist mäanderförmig in der bereits geschilderten Weise ein Siebband 45 geführt, das über eine abschließende Umlenkwalze 46 sowie Rückführwalzen 47, 48 und 49 wieder zur Aufgabe 50 für das zu entsaftende Gut zurückgeleitet ist.

Unterhalb der Umlenkwalzen 43, 44 sind Auffangbleche 51, 52 angeordnet, die dafür sorgen, daß das eventuell vom Siebband im Bereich der Umlenkwalzen 43, 44 sich ablösende Gut dem Spalt zwischen Siebband 45 und jeweiliger Preßwalze wieder zugeführt wird. Hierfür sind die Auffangbleche 51, 52 jeweils bis an den Mantel der zugeordneten Preßwalze 41, 42 herangeführt.

Auch im vorliegenden Falle ist die Rückführwalze 47 bezüglich ihrer Lagerung verstellbar so, daß hierdurch die Spannung des Siebbandes 45 eingestellt werden kann.

Der letzten Preßwalze 42 ist die Umlenkwalze 46 nachgeordnet, von wo aus mittels eines Abstreifers 60 das abgepreßte Gut aus der Vorrichtung entlassen wird. An die Umlenkwalze 46 schließt sich eine Bürstenwalze 53 zur Reinigung des Siebbandes 45 an.

Zum Auffangen des Saftes ist in diesem Falle für jede der Preßwalzen 40 bis 43 eine eigene Wanne 54, 55, 56 vorgesehen, die jeweils mit einem eigenen Saftablauf 57, 58 und 59 ausgerüstet sind.

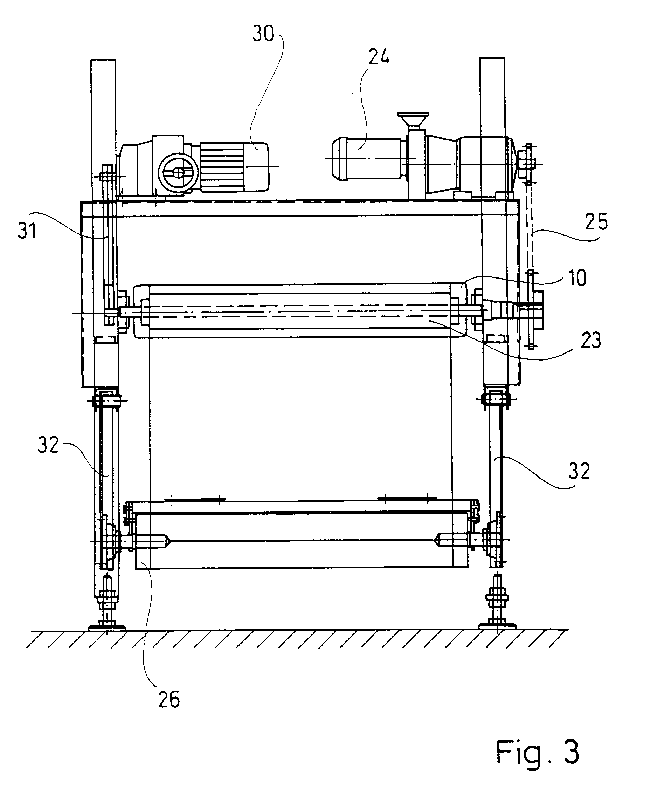

Beiden Ausführungsformen der anhand der Fig. 1 bis 4 geschilderten Art ist gemeinsam, daß die Preßwalzen als Walzen mit geschlossenen, glattwandigen Mänteln ausgebildet sein können. Es besteht jedoch auch die Möglichkeit, die Preßwalzen mit einem Sieb zu beziehen und mit radialen Öffnungen zu versehen, so daß der Saft aus dem Gut auch nach radial innen über die Preßwalzen abgezogen werden kann. In diesem Falle haben die Preßwalzen dann auf ihren Seiten Öffnungen zum Abströmen des Saftes in die jeweiligen Auffangwannen für den Saft.

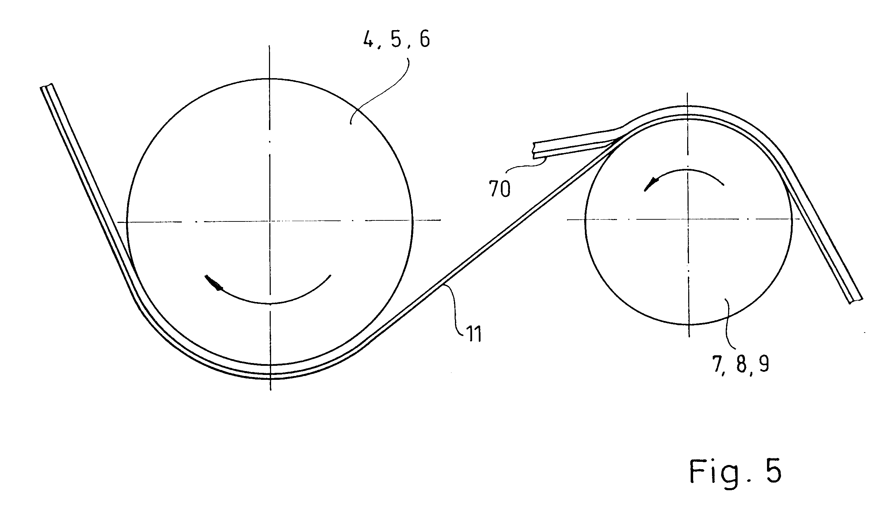

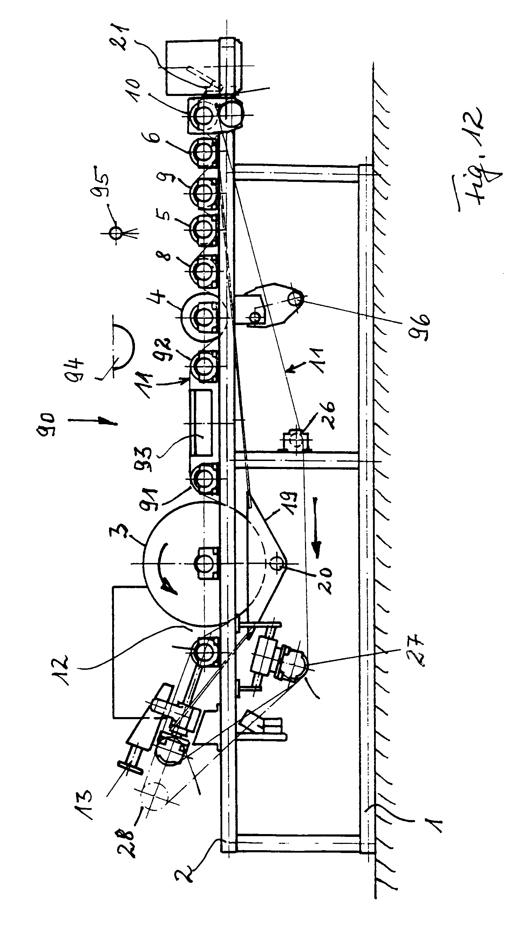

Die Fig. 5 bis 10 zeigen weitere Ausgestaltungen bzw. Ergänzungen, um die Ausbeute der Entsaftungsvorrichtung zu verbessern. Diese Ausgestaltungen sind anhand einer ausschnittweisen Vergrößerung aus der Entsaftungsvorrichtung gemäß Fig. 1 bzw. Fig. 12 dargestellt, gelten aber entsprechend auch für die Entsaftungsvorrichtung gemäß Fig. 4.

So zeigt Fig. 5 eine der Umlenkwalzen 7, 8, 9 mit einer der nachfolgenden Preßwalzen 4, 5, 6 zusammen mit dem Siebband 11. Hier ist am Ende des Umschlingungsbogens von Siebband 11 und Umlenkwalze 7, 8, 9 ein Wender in Form eines Schabers 70 angeordnet, der die Aufgabe hat, das abzupressende Gut vom Siebband abzuheben, um es zu wenden bzw. den durch das Gut gebildeten Kuchen zu brechen, bevor das Material der nächsten Preßwalze 4, 5, 6 zugeführt wird. Dadurch wird das Gut gelockert und es werden in dem Gut wieder freie Kanäle gebildet, welche die nachfolgende Preßbarkeit des Gutes verbessern.

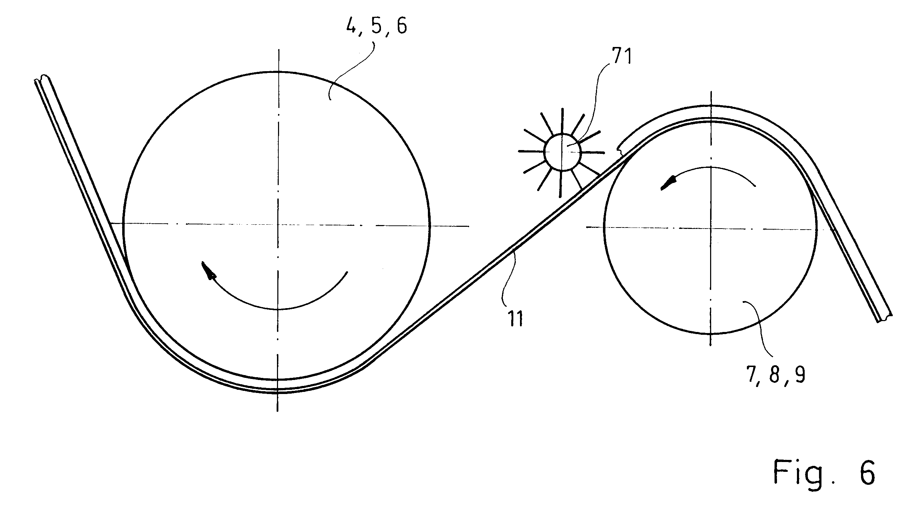

Die gleiche Wirkung läßt sich erzielen, wenn gemäß Fig. 6 an gleicher Stelle eine Stachelwalze 71 gegen das Siebband 11 gedrückt wird, wobei die Stachelwalze um eine zu der Umlenkwalze 7, 8, 9 parallele Achse drehbar ist.

Die beiden anhand der Fig. 5 und 6 geschilderten Maßnahmen können an einer oder mehrerer der Umlenkwalzen 7, 8, 9 vorgesehen werden, sie können an diesen Umlenkwalzen auch abwechselnd vorgesehen werden und es ist schließlich auch möglich, beide Maßnahmen gemäß Fig. 5 und 6 nacheinander einer der Umlenkwalzen nachzuschalten.

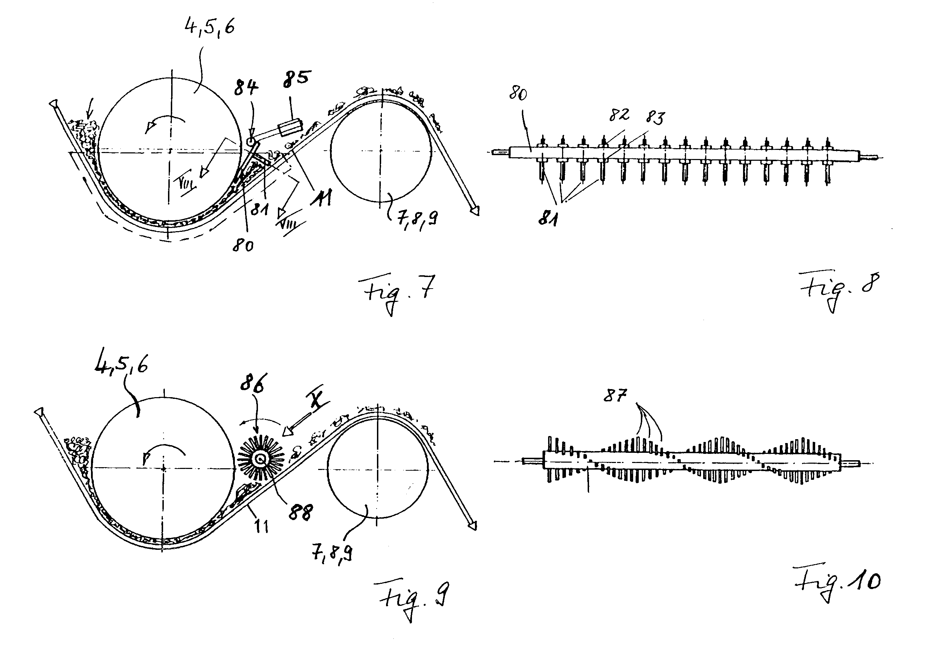

Die Fig. 7 und 9 zeigen einen den Fig. 5 und 6 entsprechenden Ausschnitt, jedoch aus der Entsaftungsvorrichtung gemäß Fig. 12, wobei den Fig. 5 und 6 ähnliche Maßnahmen ergriffen sind.

So veranschaulichen die Fig. 7 und 8 eine dem Abtragen des Gutes von einer Preßwalze 4, 5, 6 dienende Leiste 80, wie sie bereits früher beschrieben ist. Im vorliegenden Falle ist jedoch die Leiste auf der dem abgetragenen Gut bzw. dem Siebband 11 zugewandten Seite mit in das Gut eintauchenden Störkörpern versehen, die im vorliegenden Falle als Gewindestangen 81 ausgebildet sind, die in entsprechende Gewindebohrungen der Leiste 80 eingeschraubt und dort längeneinstellbar durch Mutter 82 und Kontermutter 83 festgelegt sind. Die so angeordneten Gewindestangen reißen den durch das Gut gebildeten Kuchen auf, um es zu lockern und für die nachfolgenden Bearbeitungsstufen besser preßbar zu machen.

Aus Fig. 7 ist außerdem ersichtlich, daß die Leiste 80 um eine Achse 84 schwenkbar gelagert ist, wobei sie durch ein verschiebbares Gegengewicht 85 gegen die Preßwalze gehalten wird.

Eine dem Gegenstand der Fig. 7 und 8 entsprechende Wirkung läßt sich auch mit der Bauform gemäß Fig. 9 und 10 erreichen. Dort ist in Laufrichtung gesehen hinter der Preßwalze 4, 5, 6 eine Stachelwalze 86 mit Stacheln 87 angeordnet, die dazu dient, das Gut von der Preßwalze abzunehmen und auf das Siebband 11 zu legen. Gleichzeitig taucht die Stachelwalze 86 mit ihren Stacheln 87 in das auf dem Siebband befindliche Gut ein und bricht den durch das Gut gebildeten Kuchen.

Wie Fig. 10 zeigt, können die Stacheln 87 durch gegenseitig beabstandete stangenförmige Teile gebildet sein, die in schraubengangförmig um die Welle 88 der Stachelwalze verlaufenden Reihen angeordnet sind. Fig. 10 zeigt zwei solcher Reihen, jedoch kann selbstverständlich auch deren Zahl vergrößert werden.

Was die Drehbarkeit der Stachelwalze 86 betrifft, so kann deren Antrieb durch das mit dem Siebband 11 geförderte Gut oder auch direkt durch das Siebband selbst erfolgen, indem die Stachelwalze 86 gegen das Siebband in Anlage ist. Es besteht jedoch auch die Möglichkeit, die Stachelwalze 86 gesondert anzutreiben, um deren Drehgeschwindigkeit zu variieren.

Auch für den Gegenstand der Fig. 7 und 9 gilt, daß dieser an einer oder mehreren Preßwalzen 4, 5, 6 vorgesehen werden kann.

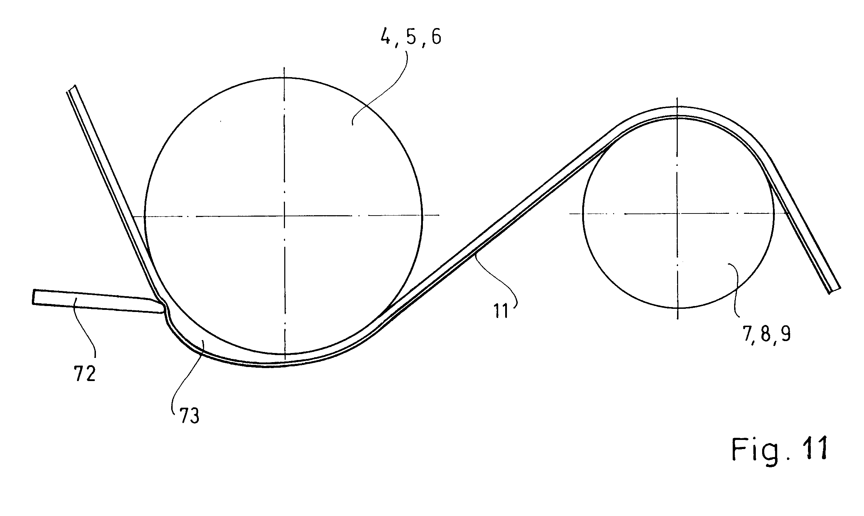

Eine weitere Verbesserung ist anhand der Fig. 11 dargestellt. Auch hier ist wieder eine der Preßwalzen mit vorgeschalteter Umlenkwalze 7, 8, 9 unter Fortlassung der übrigen sich aus Fig. 1 und Fig. 5 und 6 ergebenden Teile dargestellt.

Ersichtlich ist bezogen auf die Vorschubrichtung des Siebbandes 11 im Bereich des Endes des Umschlingungsbogens des Siebbandes gegenüber der Preßwalze 4, 5, 6 auf der der Preßwalze abgewandten Seite des Siebbandes ein quer zur Längsrichtung des Siebbandes sich erstreckender Abstreifer 72 angeordnet. Ein solcher Abstreifer kann, wenn er einfach nur gegen das Siebband gesetzt ist, insbesondere am Ende der Entsaftungsvorrichtung dafür sorgen, daß auf der Unterseite am Siebband haftender Saft abgestreift und noch der Auffangwanne 19 zugeführt wird.

Ist der Abstreifer aber in der aus Fig. 11 ersichtlichen Weise vor dem Ende des Umschlingungsbogens angeordnet, erstreckt er sich außerdem angenähert tangential zur Preßwalze 4, 5, 6 und entgegengesetzt der Vorschubrichtung des Siebbandes und ist er außerdem mit gegebenenfalls einstellbarer Kraft gegen das Siebband gedrückt, so wird ersichtlich im abzupressenden Gut eine Stauchung 73 erzeugt. Dies bedeutet, daß das abzupressende Gut innerhalb der Stautasche entspannt wird, bevor es durch den Abstreifer 72 wieder zusammengedrückt wird. Dieses Entspannen und wieder Zusammendrücken des abzupressenden Gutes bewirkt einen zusätzlichen Entsaftungseffekt gerade in dem Bereich, wo der Druck zwischen Siebband und Preßwalze 4, 5, 6 abfällt.

Selbstverständlich können auch diese Abstreifer 72 bei einer oder mehreren der Preßwalzen angebracht werden. Genauso besteht die Möglichkeit, bei der in Fig. 11 dargestellten einen Preßwalze wenigstens einen weiteren Abstreifer 72 vorzusehen, der entgegen dem Uhrzeigersinn versetzt dem dargestellten Abstreifer innerhalb des Umschlingungsbogens zwischen Siebband 11 und Preßwalze 4, 5, 6 vorgeschaltet ist.

Die Darstellung in Fig. 11 geschieht anhand solcher Preßwalzen 4, 5, 6, denen eine Umlenkwalze 7, 8, 9 vorgeschaltet ist. Die Maßnahme gemäß Fig. 11 mittels des Abstreifers 72 gilt jedoch selbstverständlich gleichermaßen für die erste Preßwalze 3.

Fig. 12 zeigt schließlich weitere zweckmäßige Ergänzungen an einer Entsaftungsvorrichtung, die vereinfacht in Seitenansicht dargestellt ist. Die Entsaftungsvorrichtung entspricht im wesentlichen der in Fig. 1 dargestellten, sie ist lediglich bezogen auf die Zeichnung nicht von rechts nach links sondern von links nach rechts laufend dargestellt. Daher sind bei der Entsaftungsvorrichtung gemäß Fig. 12 die in Fig. 1 bereits eingeführten Bezugszeichen verwendet und es wird auf die allgemeine Darstellung der Entsaftungsvorrichtung entsprechend auf die Erläuterung des Gegenstandes gemäß Fig. 1 zur Vermeidung von Wiederholungen verwiesen.

Ergänzend zeigt Fig. 12, daß bei der hinter der Preßwalze 3 gebildeten Umlenkstation 90 zwei Umlenkwalzen 91 und 92 mit gegenseitigem Abstand nebeneinander angeordnet sind. Dabei ist im Abstand zwischen diesen beiden Umlenkwalzen das Siebband 11 über eine auf seiner dem Gut abgewandten Seite angeordnete Saugvorrichtung 93 geführt.

Ferner ist aus Fig. 12 eine oberhalb des Siebbandes 11 sich quer zu dessen Vorschubrichtung erstreckende Schwemmrinne 94 ersichtlich, durch die Wasser oder eine sonstige Flüssigkeit auf das Siebband gegeben werden kann. Dem gleichen Zweck kann ein Spritzrohr 95 dienen, das vor dem Ende der dem Flüssigkeitsentzug dienenden Strecke angeordnet ist.

Unterhalb der Walzenstrecke durchläuft das Siebband 11 eine Waschvorrichtung 96 für den Fall, daß eine besonders gründliche Reinigung des Siebbandes erwünscht oder notwendig ist.

Vorstehend wurde die Erfindung anhand einer Entsaftungsvorrichtung für Früchte im einzelnen beschrieben. Diese Vorrichtung eignet sich aber gleichermaßen für alle übrigen eingangs der Beschreibung angesprochenen Anwendungsfälle, das heißt, für jegliche Trennung von Feststoff-Flüssigkeitsgemischen.

## Patentansprüche

1. Preßvorrichtung zum Flüssigkeitsentzug aus einem Gut
   - mit einem Gestell (1, 2),
   - an dem Gestell zueinander parallel drehbar gelagerten, quer zu ihren Drehachsen zumindest im wesentlichen miteinander fluchtenden Preßwalzen (3, 4, 5, 6; 40, 41, 42),

   - wobei benachbarte Preßwalzen einen gegenseitigen Abstand aufweisen,
   - mit einer jedem Preßwalzenabstand zugeordneten, zu den Preßwalzen achsparallen, drehbar am Gestell gelagerten Umlenkwalze (7, 8, 9; 43, 44, 91, 92),
   - einem über die Preß- und Umlenkwalzen vermittels eines Antriebes (30, 31) in Durchlaufrichtung des abzupressenden Gutes mäanderförmig umlaufenden Siebband (11, 45),
   - wobei das Siebband die Preßwalzen im wesentlichen unter- und die Umlenkwalzen überläuft,
   - mit einer der ersten Preßwalze (3, 40) vorgeschalteten Aufgabe (13, 50) für das Gut,
   - die das Gut in den Spalt (12) zwischen erster Preßwalze und Siebband entläßt,
   - mit einer jedem Wechsel des Siebbandes von einer Preßwalze zu einer Umlenkwalze zugeordneten, auf den Preßwalzenmantel gehenden, vom Siebband beabstandeten, zur Walzenachse parallelen Leiste (14, 80) oder Bürstenwalze (Stachelwalze 86) zum Abtragen des Gutes von der Preßwalze auf das Siebband,
   - woran sich Mittel (15, 17, 18; 51, 52) zur Weiterführung des Gutes mit dem Siebband zum Zusammenlauf des Siebbandes mit der nächstfolgenden Preßwalze anschließen,
   - mit einer in Durchlaufrichtung des Gutes durch die Preßvorrichtung der letzten Preßwalze (6, 42) nachgeordneten Einrichtung (21, 22, 23, 53) zur Entnahme des abgepreßten Gutes und zur Reinigung des Siebbandes,
   - mit unterhalb der Preßwalzen angeordneten Mitteln (19, 20; 54, 55, 56, 57, 58, 59) zum Auffangen und Abführen der Flüssigkeit und
   - mit am Gestell drehbar gelagerten Rückführwalzen (26 bis 29; 47 bis 49) zur Überleitung des Siebbandes von der letzten Preßwalze zur ersten Preßwalze,
   - welche Rückführwalzen parallel zu den Preßwalzen und mit diesen quer zu ihren Drehachsen zumindest im wesentlichen fluchtend angeordnet sind.

2. Vorrichtung nach Anspruch 1,
   dadurch gekennzeichnet,
   daß die Preßwalzen (3 bis 6; 40 bis 42) geschlossen glatte Walzenmäntel aufweisen.

3. Vorrichtung nach Anspruch 1,
   dadurch gekennzeichnet,

daß die Preßwalzenmäntel zumindest teilweise als Siebmäntel ausgebildet sind, und daß die Preßwalzen (3 bis 6; 40 bis 42) über stirnseitige Öffnungen mit den Mitteln (19, 20; 54 bis 59) zum Auffangen und Abführen der Flüssigkeit in Verbindung stehen.

4. Vorrichtung nach Anspruch 1,
dadurch gekennzeichnet,
daß die Preßwalzen (3 bis 6; 40 bis 42) im wesentlichen in einer geradlinigen Reihe in Durchlaufrichtung des Gutes hintereinander angeordnet sind.

5. Vorrichtung nach Anspruch 1,
dadurch gekennzeichnet,
daß der Durchmesser nacheinander folgender Preßwalzen (3 bis 6; 40 bis 42) in Durchlaufrichtung des Gutes stufenweise geringer ausgelegt ist.

6. Vorrichtung nach Anspruch 4,
dadurch gekennzeichnet,
daß bei im wesentlichen horizontal hintereinander liegenden Preßwalzen (3 bis 6) die jedem Preßwalzenabstand zugeordneten Umlenkwalzen (7 bis 9) mit den Preßwalzen im wesentlichen in Reihe angeordnet sind, und daß die Umlenkwalzen den jeweiligen Preßwalzenabstand im wesentlichen ausfüllen.

7. Vorrichtung nach Anspruch 6,
dadurch gekennzeichnet,
daß die Mittel zur Weiterführung des Gutes sich an die jeweiligen Leisten (14, 80) bzw. Bürstenwalzen (86) in Durchlaufrichtung des Gutes anschließende Umlenkbleche (15, 17, 18) sind, die den zwischen benachbarten Preßwalzen freien, vom Siebband (11) überdeckten Mantelbogen der zugeordneten Umlenkwalzen (7, 8, 9) teilweise und im wesentlichen äquidistant und unter Freilassung eines wenigstens der Dicke des Siebbandes und der durch das Gut gebildeten Schicht entsprechenden Abstandes überdecken.

8. Vorrichtung nach Anspruch 7,
dadurch gekennzeichnet,
daß die Umlenkbleche (15, 17, 18) dem Siebband (11) zugewandte, zur jeweiligen Umlenkwalze (7, 8, 9) im wesentlichen sich radial erstreckende Leitbleche (34) für das Gut aufweisen.

9. Vorrichtung nach Anspruch 8,
dadurch gekennzeichnet,
daß wenigstens zwei Leitbleche (34) für die seitliche Begrenzung des Weges für das Gut vorgesehen sind.

10. Vorrichtung nach Anspruch 9,
dadurch gekennzeichnet,
daß der gegenseitige Abstand der Leitbleche (34) quer zur Durchlaufrichtung des Gutes sich in Durchlaufrichtung verringernd ausgebildet ist.

11. Vorrichtung nach Anspruch 4,
dadurch gekennzeichnet,
daß bei im wesentlichen in Vertikalrichtung hintereinanderliegenden Preßwalzen (40 bis 42) mit Aufgabe (50) des Gutes auf den Spalt zwischen oberster Preßwalze (40) und Siebband (45) jeder Umlenkwalze (43, 44) ein unterhalb dieser angeordnetes und bis an die nachfolgende Preßwalze geführtes Fangblech (51, 52) für das Gut zugeordnet ist.

12. Vorrichtung nach Anspruch 1,
dadurch gekennzeichnet,
daß der Auslaufquerschnitt der Aufgabe (13, 50) für das Gut quer zur Durchlaufrichtung des Gutes schmaler als das Siebband (11, 45) ist.

13. Vorrichtung nach Anspruch 1,
dadurch gekennzeichnet,
daß die Einrichtung zur Entnahme des abgepreßten Gutes und zur Reinigung des Siebbandes (11, 45) eine quer zur Durchlaufrichtung des Gutes angeordnete, auf dem Siebband aufsitzende Abstreifleiste (21, 60) mit nachgeschalteter, auf das Siebband gehender Bürstenwalze (23, 53) aufweist, wobei das Siebband zusammen mit dem abgepreßten Gut diese Einrichtung über eine der letzten Preßwalze (6, 42) nachgeschaltete Umlenkwalze (10, 46) durchläuft und das abgepreßte Gut über eine der Abstreifleiste nachgeschaltete Führungsebene (22) abführbar ist.

14. Vorrichtung nach Anspruch 1,
dadurch gekennzeichnet,
daß die Leiste (80) auf ihrer dem abgetragenen Gut bzw. dem Siebband (11) zugewandten Seite mit in das Gut eintauchenden Störkörpern (81) versehen ist.

15. Vorrichtung nach Anspruch 14,
dadurch gekennzeichnet,
daß die Störkörper durch eine sich quer zur Laufrichtung des Siebbandes (11) erstreckende Reihe von an der Leiste (80) mit gegenseitigem Abstand befestigten Rohren oder Stangen (81) gebildet sind.

16. Vorrichtung nach Anspruch 15,

dadurch gekennzeichnet,
daß die Stangen (81) in die Leiste (80) eingeschraubte und durch Mutter (82) und Kontermutter (83) fixierte Gewindestangen sind.

17. Vorrichtung nach Anspruch 14,
dadurch gekennzeichnet,
daß die Leiste (80) insgesamt und/oder gegebenenfalls einzelne Störkörper um eine quer zur Vorschubrichtung des Siebbandes gelegene Achse (84) gegen eine sie an den Preßwalzenmantel drückende Rückstellkraft schwenkbar angeordnet ist.

18. Vorrichtung nach Anspruch 17,
dadurch gekennzeichnet,
daß die Rückstellkraft einstellbar ist.

19. Vorrichtung nach Anspruch 18,
dadurch gekennzeichnet,
daß die Rückstellkraft durch ein an der Leiste (80) angreifendes, verschiebbares Gegengewicht (85) gebildet ist.

20. Vorrichtung nach Anspruch 1,
dadurch gekennzeichnet,
daß die Bürstenwalze durch eine Stachelwalze (86) gebildet ist, deren Stachel (87) gleichzeitig in das abgetragene Gut eintauchen.

21. Vorrichtung nach Anspruch 20,
dadurch gekennzeichnet,
daß die Stachel (87) durch gegenseitig beabstandete stangenförmige oder schaufelförmige Teile gebildet sind.

22. Vorrichtung nach Anspruch 21,
dadurch gekennzeichnet,
daß die Stachel (87) in schraubengangförmig um die Welle (88) der Stachelwalze (86) verlaufenden Reihen angeordnet sind.

23. Vorrichtung nach Anspruch 20,
dadurch gekennzeichnet,
daß die Stachelwalze (86) in der Drehrichtung der zugeordneten Preßwalze (4, 5, 6) drehangetrieben ist.

24. Vorrichtung nach Anspruch 1,
dadurch gekennzeichnet,
daß - bezogen auf die Vorschubrichtung des Siebbandes (11, 45) - im Bereich des Endes des Umschlingungsbogens des Siebbandes gegenüber den Umlenkwalzen (7 bis 9, 43, 44) an wenigstens einer Umlenkwalze ein Wender (70, 71) für das abzupressende Gut angeordnet ist.

25. Vorrichtung nach Anspruch 24,
dadurch gekennzeichnet,
daß der Wender als gegen das Siebband (11, 45) gerichteter, in das abzupressende Gut eintauchender, im wesentlichen entgegengesetzt der Vorschubrichtung des Siebbandes gerichteter Schaber (70) ausgebildet ist.

26. Vorrichtung nach Anspruch 24,
dadurch gekennzeichnet,
daß der Wender als gegen das Siebband (11, 45) gerichtete, in das abzupressende Gut eintauchende Stachelwalze (71) mit zur Umlenkwalze (7 bis 9, 43, 44)paralleler Achse ausgebildet ist.

27. Vorrichtung nach Anspruch 1,
dadurch gekennzeichnet,
daß - bezogen auf die Vorschubrichtung des Siebbandes (11, 45) - im Bereich des Endes des Umschlingungsbogens des Siebbandes gegenüber den Preßwalzen (3 bis 6, 40 bis 42) an wenigstens einer Preßwalze auf der der Preßwalze abgewandten Seite des Siebbandes ein quer zur Längsrichtung des Siebbandes sich erstreckender Abstreifer (72) mit dem Siebband in Eingriff ist.

28. Vorrichtung nach Anspruch 27,
dadurch gekennzeichnet,
daß der Abstreifer (72) vor dem Ende des Umschlingungsbogens angeordnet ist, sich angenähert tangential zur Preßwalze (3 bis 6, 40 bis 42) und entgegengesetzt der Vorschubrichtung des Siebbandes (11, 45) erstreckt und mit gegebenenfalls einstellbarer Kraft gegen das Siebband gedrückt ist.

29. Vorrichtung nach Anspruch 28,
dadurch gekennzeichnet,
daß wenigstens ein weiterer Abstreifer (72) dieser Art am Umschlingungsbogen dem ersten Abstreifer bei derselben Preßwalze (3 bis 6, 40 bis 42) bezüglich der Vorschubrichtung des Siebbandes (11, 45) vorgeschaltet ist.

30. Vorrichtung nach Anspruch 1,
dadurch gekennzeichnet,
daß wenigstens eine der Rückführwalzen (26 bis 29; 47 bis 49) als mittensymmetrisch bombierte Walze ausgebildet ist.

31. Vorrichtung nach Anspruch 1,
dadurch gekennzeichnet,
daß die Lagerung wenigstens einer der Rückführwalzen (26, 47) am Gestell (1, 2) im Sinne einer Spannung des Siebbandes (11, 45) verstellbar angeordnet ist.

**32.** Vorrichtung nach Anspruch 1,
dadurch gekennzeichnet,
daß der Antrieb (30, 31) über mindestens eine
der Preß- und/oder Umlenkwalzen (10) erfolgt.

**33.** Vorrichtung nach Anspruch 1,
dadurch gekennzeichnet,
daß bei wenigstens einer durch eine Umlenkwalze zwischen zwei Preßwalzen (4, 5, 6) gebildeten Station (90) zwei Umlenkwalzen (91,
92) mit gegenseitigem Abstand nebeneinander
angeordnet sind, und daß im Abstand das
Siebband (11) über eine auf seiner dem Gut
abgewandten Seite angeordnete Saugvorrichtung (93) geführt ist.

**34.** Vorrichtung nach Anspruch 1,
dadurch gekennzeichnet,
daß oberhalb des Siebbandes (11) eine sich
quer zu dessen Vorschubrichtung erstreckende
Schwemmrinne (94) angeordnet ist.

**35.** Vorrichtung nach Anspruch 1,
dadurch gekennzeichnet,
daß zumindest ein Spritzrohr (95) vor dem
Ende der dem Flüssigkeitsentzug dienenden
Strecke angeordnet ist.

Fig. 1

Fig. 2

Fig. 3

Fig. 4

Fig. 5

EP 0 519 309 A2

Fig. 6

Fig. 11

Fig. 12